# EUROPEAN PATENT SPECIFICATION

(11) **EP 2 005 545 B1**
(45) Date of publication and mention of the grant of the patent: **07.09.2011**
(21) Application number: 07705382.5
(22) Date of filing: 16.02.2007
(51) Int. Cl.: H02G 3/04, H02G 3/12

(54) **A BACK BOX**
BACK-BOX
BOÎTE ARRIÈRE

(30) Priority: 04.03.2006 GB 0604434; 07.06.2006 GB 0611180
(43) Date of publication of application: 24.12.2008
(73) Proprietor: Fire & Sound Solutions LLP, Leeds LS2 9NF (GB)
(72) Inventor: Dobson, Nigel, Bradford, BD1 5BD (GB)
(74) Representative: Waddington, Richard
(86) International application number: PCT/GB2007/050069
(87) International publication number: WO 2007/099364

(56) References cited:
- EP-A- 1 014 523
- DE-A1- 10 112 701
- DE-U1- 7 734 966
- FR-A1- 2 771 224
- US-A- 4 616 104
- US-A- 4 667 840

## Description

This invention relates to a back box, particularly, an insulated back box for electrical sockets and the like.

Traditional, electrical socket back boxes are made from a single layer of plastic or metal. These standard back boxes can not be used alone in dry lined internal (drywall system) party walls because they fail to meet the building regulations minimum acoustic (decibel db) ratings and fire ratings requiring to be achieved including airtightness.

In order to use standard electrical back boxes in drylined/internal party walls, additional insulation must be provided around the back box. This may be provided by pressing a layer of an insulating putty material onto the insides of the back box by hand after the back box has been inserted into an opening in the wall. This process occurs on-site. The insulating material increases the insulation properties of the back box to meet the required standards as set out above. However, the process of applying a layer of insulating material to the back box on-site can be problematic and takes up time which could be better spent on other tasks.

Alternatively, large pads of insulating material may be stuck onto the rear of the wall lining board in a drylined/party wall over the protruding back box to provide the required level of insulation from sound and fire to comply with the regulations. However, once a party wall has been constructed, it becomes impossible to reach to the rear of the wall lining in the wall to check that the insulating pad remains in place. Consequently, this method of insulation is less useful.

US patent 4667840 describes an electrical junction box having a rearwardly opening container portion filled with a fluid insulating material which hardens.

It is an object of the present invention to address these and other problems associated with the prior art.

Accordingly, a first aspect of the present invention provides a back box comprising at least one layer of an insulating material, said material being located between an inner casing and an outer casing of the back box.

The layer of insulating material advantageously eliminates the time and effort required to insulate the back box on-site.

Preferably, the at least one layer of insulating material is integral with the inner casing and outer casing of the back box.

Preferably, there is a single layer of insulating material between the inner and outer casings.

The insulating material is preferably thermally insulating, and preferably acoustically insulating.

The insulating material may be a putty material, preferably acoustic mastic. Preferably, the layer of insulating material is between approximately 1 and 6mm thick, more preferably, between approximately 3 and 4mm thick.

The inner and outer casings of the back box may be made from any suitable material, for example, plastics or metals. Preferably, the inner and outer casings are made from a hard plastics material. Other materials may be used, such as metal.

The back box may provide acoustic insulation to a rating of approximately 50 dB. Preferably, the integral insulation in the back box has a rating of up to 60 dB for acoustic insulation, more preferably, up to a 64 dB acoustic insulation rating; and a rating of 2 hours for fire insulation.

Preferably, the back box is of a standard size to accommodate a standard single or a standard double electrical socket, light switch or the like. The inner casing may be a standard electrical socket/switch back boy.

Preferably, the back box comprises a lip around its open perimeter to provide support against an external face of a wall lining.

The back box may be adapted to be secured in place by fixing means. Preferably, the back box is adapted to be secured in place by adjustable fixing clips.

The fixing clips may be constructed integrally with the back box. Preferably, the fixing clips slide in locating grooves in the outer casing of the back box. Each fixing clip preferably extends substantially from the rear of the back box at an acute angle to, and along a side of, the back box. Preferably, each fixing clip has a gripping surface at the end thereof which is adapted to engage the wall, preferably by bracing against an internal face of the wall lining.

One or more fixing clips may be used. Preferably, two fixing clips are used which extend substantially along opposite sides of the back box.

The fixing clips may be suitable for fixing the back box within a range of thicknesses of wall. Suitably, the fixing clips are between approximately 5mm and 25mm long, preferably between approximately 7mm and 20mm long, most preferably between approximately 9mm and 15mm long. Preferably, the fixing clips are between approximately 1mm and 5mm wide.

The fixing clips may have a spring return facility to allow for easy removal of the back box from a wall. The fixing clips may have serrations on the gripping surfaces to provide a better grip against the wall.

The fixing clips are, preferably, adjustable towards and away from a surface of a wall. Preferably, an adjusting screw is provided to adjust the position of each fixing clip.

Alternatively, the back box may be adapted to be secured in place by screwing to the wall or gluing onto the wall.

The back box may also have fixing means for receiving and securing a standard, single or double, socket or switch fascia in place. These fixing means may be hard plastic fixing points having threaded holes which may receive the external thread of a screw.

A rubber seal may be provided around the lip of the back box to form an airtight seal when the fascia is secured in position. Preferably, the rubber seal is between approximately 3mm and 7mm wide, more preferably between 4mm and 6mm wide. The rubber seal may have a height of approximately 3mm, approximately 5mm or approximately 7mm from the surface of the lip depending on the depth of the fascia.

Alternatively, the rubber seal may have a stepped profile when viewed in cross-section, to ensure that an airtight seal may be made when any depth of fascia is secured in place. Preferably, the rubber seal has a height at one edge of approximately 3mm from the surface of the lip, and a height at the other edge of approximately 7mm from the surface of the lip. Preferably, the middle of the rubber seal has a height of approximately 5mm from the surface of the lip.

The stepped profile of the rubber seal may result from the seal comprising at least two concentric rubber strips having varying heights from the surface of the lip. Preferably, the rubber seal comprises three concentric rubber strips. Preferably, a first strip has a height of approximately 3mm, preferably, a second strip has a height of approximately 5mm, and preferably, a third strip has a height of approximately 7mm.

A hole, or holes, may be drilled in the rear face or side faces of the back box to suit any wiring requirements. Said hole or holes are preferably sealed with a fire washer, and/or acoustic fire mastic.

The inner and outer casings and the insulating material may be formed from a composite material, preferably consisting of three layers. Preferably, said composite material is adapted to be shaped by press-moulding.

According to a second aspect of the present invention, there is provided a method of manufacturing an integrally insulated back box comprising the steps of:-
a) applying at least one layer of insulating material onto the rear surface of an inner casing; and
b) applying an outer casing onto the at least one layer of insulating material.

Preferably, the at least one layer of insulating material is applied to the rear surface of the inner casing by press-moulding.

Preferably, the outer casing is applied to the at least one layer of insulating material by press-moulding.

Preferably, a single layer of insulating material is used.

The insulating material is preferably a putty material, preferably acoustic mastic.

Preferably, the method of manufacture includes the further step of integrating fixing clips into the back box, to secure the back box in place in a wall. Preferably, the fixing clips are located in locating grooves in the outer casing of the insulated back box.

According to another aspect of the present invention, there is provided a back box comprising at least one layer of an insulating material, said insulating material being secured to an outer casing of the back box.

The insulating material and outer casing are preferably integrally formed.

The invention extends to a method of manufacturing a back box according to the preceding aspect, comprising securing the insulation material inside the outer casing. The securing is preferably done by press moulding.

All of the features described herein may be combined with any of the above aspects in any combination.

For a better understanding of the invention, and to show how embodiments of the same may be carried into effect, reference will now be made, by way of example, to the accompanying drawings in which:
Figure 1 shows a plan view of a single socket back box; and
Figure 2 shows a cross-sectional view of the back box of figure 1 along the line I-I.

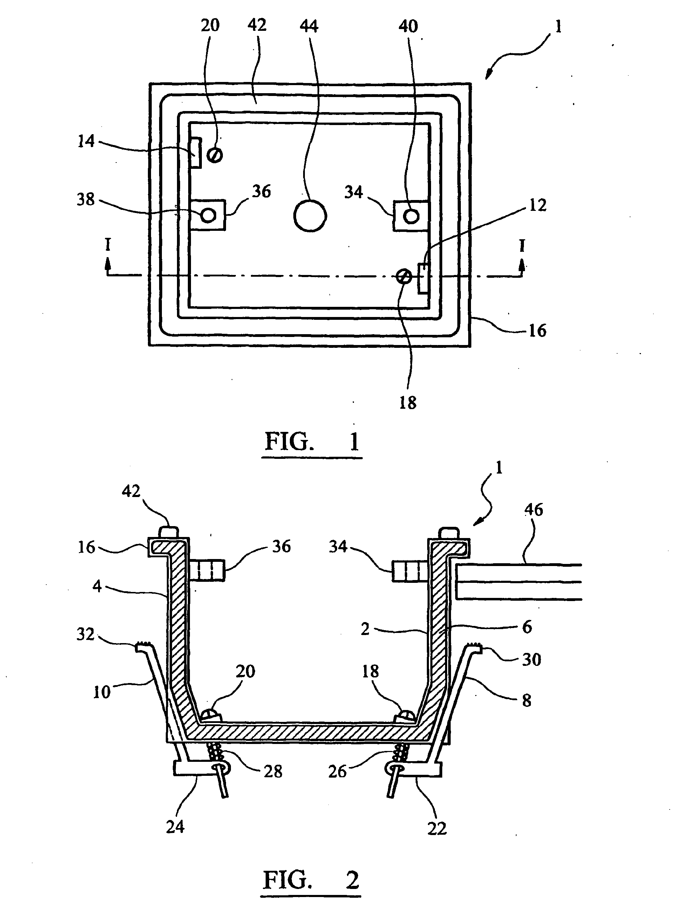

Referring to figures 1 and 2, an electrical socket back box 1 comprises an inner casing 2, an outer casing 4 and an integral layer of insulating material 6, which may be acoustic mastic. The inner casing 2 and outer casing 4 are composed of a hard plastic material. The insulating material 6 provides insulation of up to 64 dB acoustic rating and 2 hours fire rating. The layer of insulating material 6 is press moulded onto the rear surface of the inner casing 2 and the outer casing 4 is press moulded onto the layer of insulating material 6.

The back box 1 has substantially the same shape as existing electrical back boxes, and may be used as a replacement for such existing back boxes. The maximum overall thickness of the back box 1, including the inner casing 2, insulating material 6 and outer casing 4, is approximately 6mm.

The back box 1 has fixing means for securing the box to a boarded party wall 46. The fixing means comprise two fixing clips 8, 10. The fixing clips 8, 10 are held in place and are slidable in locating grooves 12, 14 in the sides of the outer casing 4 for easy adjustment. The locating grooves 12, 14 can be moved as needed to account for different fixing positions. The fixing clips 8, 10 are sized to suit the fixing location/requirements. The locating grooves 12, 14 are in the form of grooves within the back box for the fixing clips 8 and 10 to travel up to keep the plane of travel at an angle sufficient that the final finishing position of clips 8 and 10 meet the inner face of the wall lining to tightly secure the back box within its final position. The fixing clips 8, 10 are adjustable towards and away from a lip 16 of the back box by means of adjusting screws 18, 20. The fixing clips 8, 10 are attached to the adjusting screws 18, 20 by attachment means 22, 24. The fixing screws have spring releases 26, 28 to facilitate easy removal of the back box 1 from the wall. The gripping ends of 30, 32 of the fixing clips 8, 10 are serrated to promote a strong grip between the fixing clips 8, 10 and the boarded wall 46. In Figure 2, the lip 16 does not have to have the sealed edge shown but could be open.

The back box 1 as shown in figures 1 and 2 has means for attaching a standard electrical socket or switch fascia thereto. These means comprise hard plastic fixing points 34, 36 which each have an internally threaded hole 38, 40 running through the centre to engage the external thread of a screw.

A rubber seal 42 is provided around the lip 16 of the back box 1 to form an airtight seal with a socket or switch fascia when attached at the fixing points 34, 36. The rubber seal has a width of approximately 5mm, and a height from the surface of the lip of approximately 5mm. The airtight seal provides additional sound insulation.

A hole 44 is drilled in the rear or other surface of the back box to accommodate electrical wires. Any wires extending through the hole 44 are provided with a fire washer and/or acoustic mastic to ensure thermal and acoustic integrity.

In use, the integrally insulated back box 1 is secured in a pre-prepared opening in a plasterboard wall 46 by adjusting screws 18 and 20 so that the gripping ends 30, 32 of the fixing clips 8, 10 engage the rear of the plasterboard wall 46 and so can brace against the wall 46. The fascia is then secured to the back box 1 at fixing points 34 and 36.

The integral layer of insulating material in the back box means that the amount of on-site insulating which must be carried out is greatly reduced saving both time, effort and expense on building projects.

The back box 1 may alternatively be press-moulded from a three layer composite material.

Alternatively, the rubber seal 42 may have a stepped profile. In this case, the rubber seal 42 is in use made to the appropriate height for the depth of fascia by removing the top steps of the profile as required.

A further alternative is to have no inner casing 2, but only an outer casing 4 and the insulating material 6. This would require different fixings for fixing points 34, 36, which would need to be secured to the insulating material 6, or to the outer casing 4 with little or no degradation of the thermal and/or acoustic insulating properties of the back box.

The back boxes described above can be used in relation to walls made of or including brickwork, blockwork, concrete, drylining and the like. The back boxes made be used in a wall, floor, ceiling, door, raised floor or the like.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features in any location.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A back box comprising at least one layer of a thermally insulating material, said material being located between an inner casing and an outer casing of the back box, **characterised in that** the back box has a thermal insulation to a rating of 2 hours for fire insulation.

2. The back box according to claim 1, wherein the at least one layer of insulating material is integral with the inner casing and outer casing of the back box.

3. The back box according to either claim 1 or claim 2, wherein the insulating material is acoustically insulating.

4. The back box according to claim 3, which provides acoustic insulation to a rating of approximately 50 dB.

5. The back box according to any preceding claim, wherein the inner and outer casings and the insulating material are formed from a composite material.

6. A method of manufacturing an integrally insulated back box comprising the steps of:-
a. applying at least one layer of thermally insulating material onto the rear surface of an inner casing; and
b. applying an outer casing onto the at least one layer of insulating material;
**characterised in that** the back box has a thermal insulation to a rating of 2 hours for fire insulation.

7. The method according to claim 6, wherein the at least one layer of insulating material is applied to the rear surface of the inner casing by press-moulding.

8. The method according to either claim 6 or claim 7, wherein the outer casing is applied to the at least one layer of insulating material by press-moulding.

## Patentansprüche

1. Rückwandkasten mit mindestens einer Lage aus einem wärmeisolierenden Material, das zwischen einem inneren Gehäuse und einem äußeren Gehäuse des Rückwandkastens angeordnet ist, **dadurch gekennzeichnet, dass** der Rückwandkasten eine Wärmeisolierung mit einer Feuerisolierung von 2 Stunden hat.

2. Rückwandkasten nach Anspruch 1, wobei die mindestens eine Lage an Isoliermaterial mit dem inneren Gehäuse und dem äußeren Gehäuse des Rückwandkastens integral ist.

3. Rückwandkasten nach Anspruch 1 oder 2, wobei das Isoliermaterial schallisolierend ist.

4. Rückwandkasten nach Anspruch 3, der Schallisolierung bis zu einem Wert von ungefähr 50 dB bereitstellt.

5. Rückwandkasten nach einem der vorhergehenden Ansprüche, wobei das innere und das äußere Gehäuse und das Isoliermaterial aus einem Verbundmaterial gebildet sind.

6. Verfahren zur Herstellung eines integral isolierten Rückwandkastens mit den folgenden Schritten:
a. Aufbringen von mindestens einer Lage aus wärmeisolierendem Material auf die Rückfläche eines inneren Gehäuses und
b. Aufbringen eines äußeren Gehäuses auf die mindestens eine Lage des Isoliermaterials,
**dadurch gekennzeichnet, dass** der Rückwandkasten eine Wärmeisolierung mit einer Feuerisolierung von 2 Stunden hat.

7. Verfahren nach Anspruch 6, wobei die mindestens eine Lage aus Isoliermaterial durch Pressen auf die Rückfläche des inneren Gehäuses aufgebracht wird.

8. Verfahren nach Anspruch 6 oder 7, wobei das äußere Gehäuse durch Pressen auf die mindestens eine Lage aus Isoliermaterial aufgebracht wird.

## Revendications

1. Boîte arrière comprenant au moins une couche de matériau d'isolation thermique, ledit matériau étant situé entre un boîtier intérieur et un boîtier extérieur de la boîte arrière, **caractérisée en ce que** la boîte arrière a une isolation thermique correspondant à un degré de résistance au feu de 2 heures.

2. Boîte arrière selon la revendication 1, dans laquelle ladite au moins une couche de matériau d'isolation est formée d'un seul tenant avec le boîtier intérieur et le boîtier extérieur de la boîte arrière.

3. Boîte arrière selon la revendication 1 ou la revendication 2, dans laquelle le matériau d'isolation est isolant acoustiquement.

4. Boîte arrière selon la revendication 3, qui fournit un degré d'isolation acoustique d'environ 50 dB.

5. Boîte arrière selon l'une des revendications précédentes, dans laquelle les boîtiers intérieur et extérieur et le matériau d'isolation sont constitués d'un matériau composite.

6. Procédé de fabrication d'une boîte arrière intégralement isolée, comprenant les étapes consistant à :
a. appliquer au moins une couche de matériau d'isolation thermique sur la surface arrière d'un boîtier intérieur ; et
b. appliquer un boîtier extérieur sur ladite au moins une couche de matériau d'isolation ;
**caractérisé en ce que** la boîte arrière a une isolation thermique correspondant à un degré de résistance au feu de 2 heures.

7. Procédé selon la revendication 6, dans lequel ladite au moins une couche de matériau d'isolation est appliquée sur la surface arrière du boîtier intérieur par moulage par compression.

8. Procédé selon la revendication 6 ou la revendication 7, dans lequel le boîtier extérieur est appliqué sur ladite au moins une couche de matériau d'isolation par moulage par compression.
